(19) Europäisches Patentamt
European Patent Office
Office européen des brevets

(11) **EP 1 522 950 B1**

(12) **EUROPEAN PATENT SPECIFICATION**

(45) Date of publication and mention
of the grant of the patent:
**09.05.2007 Bulletin 2007/19**

(51) Int Cl.:
***G06K 7/10*** (2006.01)     ***G06K 19/07*** (2006.01)
***G06K 19/077*** (2006.01)

(21) Application number: **04023949.3**

(22) Date of filing: **07.10.2004**

(54) **RF tag module and article with an RF tag module**

HF-Etikettenmodul und Artikel mit einem HF-Etikettenmodul

Module d'étiquette à radiofréquence et article avec un module d'étiquette à radiofréquence

(84) Designated Contracting States:
**DE FR GB**

(30) Priority: **08.10.2003 JP 2003349827**
**28.11.2003 JP 2003400265**

(43) Date of publication of application:
**13.04.2005 Bulletin 2005/15**

(73) Proprietor: **Toshiba TEC Kabushiki Kaisha**
**Tokyo 141-8664 (JP)**

(72) Inventors:
• **Oishi, Sadatoshi**
**c/o TOSHIBA TEC Kabushiki Kaisha**
**Tokyo 141-8664 (JP)**
• **Kato, Masakazu**
**c/o TOSHIBA TEC Kabushiki Kaisha**
**Tokyo 141-8664 (JP)**
• **Matsushita, Naohiro**
**c/oTOSHIBA TEC Kabushiki Kaisha**
**Tokyo 141-8664 (JP)**
• **Sano, Koichi**
**c/o TOSHIBA TEC Kabushiki Kaisha**
**Tokyo 141-8664 (JP)**
• **Murofushi, Nobuo**
**2-17-2, Higashigotanda, Shinagawa-ku, (JP)**
• **Matsumoto, Yasuo**
**2-17-2, Higashigotanda, Shinagawa-ku (JP)**

(74) Representative: **Kramer - Barske - Schmidtchen**
**European Patent Attorneys**
**Patenta**
**Radeckestrasse 43**
**81245 München (DE)**

(56) References cited:
EP-A- 1 139 278     WO-A-00/26993
WO-A-01/03058     WO-A-01/03188
US-A- 6 166 638     US-B1- 6 259 408

• **PATENT ABSTRACTS OF JAPAN vol. 2002, no. 06, 4 June 2002 (2002-06-04) -& JP 2002 037425 A (HITACHI LTD), 6 February 2002 (2002-02-06)**

## Description

The present invention relates, in general, to an RF tag reading apparatus using a container for containing a plurality of articles to each of which an RF tag is affixed. In particular, the invention relates to an RF tag module suitable for use with an RF tag reading apparatus which reads data from the RF tags of the respective articles regularly contained in the container.

Japanese patent application Kokai publication No. 2002-37425 discloses an apparatus that contains in a container a plurality of articles, for example, registered mails, with RF tags attached thereto, and reads data from the RF tags of the respective registered mails by an interrogator disposed outside of the container. This apparatus is constituted such that, the container is internally partitioned at a predetermined interval by plural partition boards to each of which an antenna is attached, each of the registered mails being placed in the respective partition, and data is read from a selected one out of the RF tags through the antenna arranged on the respective partition board.

The inventors of the present invention became aware of a problem in the structure of the apparatus described in the aforementioned Kokai publication. The problem is that, the structure as described in the publication does not permit a number of registered mails to be contained in the container at a time, since each of the registered mails should individually be placed in the respective partition in the container. Therefore, since each reading takes place at each container one by one, it is difficult to read more registered mails at a time by a single operation of reading. In other words, the efficiency of reading RF tags was low. Besides, there is a problem that the structure becomes complicated because in addition to provision of the partition boards in the container, an antenna has to be provided to each of the partition boards.

US Patent No. 6,259,408 discloses an RFID transponder in accordance with the preamble of claim 1. The disclosed RFID transponder comprises a rectangular substrate with a radio frequency integrated circuit (RFID IC) mounted thereon. The RFID IC is coupled to an antenna circuit comprising dipole elements and an impedance adjustment element.

International Publication No. WO00/26993 discloses an RFID tag comprising an antenna, an RF processing section, i.e., the front end, and a signal processing section. The antenna, preferably a dipole antenna, has one or more loading bars that are placed adjacent to the elements of the antenna at a spacing distance. Adjustment of the loading bar length, width, and/or the spacing distance and/or the number of loading bars changes the real part of the antenna input impedance.

It is an object of the present invention to provide an improved RF tag module which makes it possible that more articles provided with such RF tag modules can be read in a single container of a reading apparatus.

This object is achieved by the present invention as defined in claim 1.

Further advantageous embodiments of the invention are defined in the dependent claims.

FIG. 1 is a perspective view of a general structure of a first example comparative to the present invention.

FIG. 2 is a view of a postal envelope that is used in the first comparative example.

FIG. 3 is a perspective view of a general structure of first embodiment according to the present invention

FIG. 4 is a view of a structure of an RF tag module that is used in the first embodiment.

FIG. 5 is a perspective view of an experimental example in which a radiation direction of a reader antenna is arranged nearly orthogonal to an arrangement direction of RF tags.

FIG. 6 is a chart illustrating a result of data reading in the arrangement shown in FIG. 5.

FIG. 7 is a perspective view of an arrangement of reader antenna and RF tags, wherein a radiating direction of the reader antenna is oriented nearly orthogonal to an arrangement direction of the RF tags, each of which is provided with a reflector that is used in the first arrangement.

FIG. 8 is a chart illustrating data readability obtained in the arrangement of the first embodiment, wherein a distance between an RF tag of each of the RF modules and the reflector is varied while a distance between the RF tags and the reader antenna is maintained constant.

FIG. 9 is a chart showing a result of data reading in the arrangement in FIG. 7.

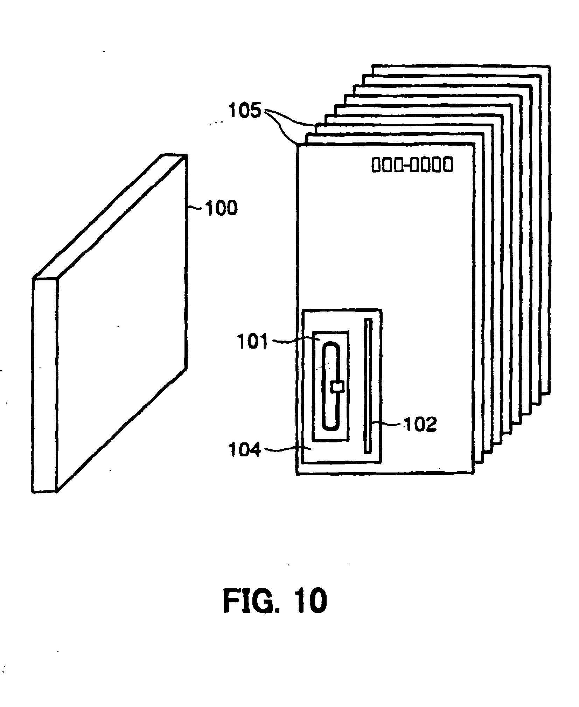

FIG. 10 is a perspective view of an arrangement wherein postal envelopes, to each of which an RF tag module used in the first embodiment is affixed, are arranged face to face with each other so that a radiation direction of the reader antenna is oriented orthogonal to an arrangement direction of the RF tag modules.

FIG. 11 is a perspective view of an RF tag module provided with a spacer used in the first embodiment.

FIG. 12 is a view of a postal envelope to which an RF tag and reflector used in the first embodiment are directly affixed.

FIG. 13 is a view of another example of a postal envelope used in the first embodiment.

FIG. 14 is a view of a postal envelope to which a spacer is affixed together with the RF tag and the reflector to be used in the first embodiment.

FIG. 15 is a view of another example of a structure of an RF tag module to be used in the first embodiment.

FIG. 16 is a view of a general structure pertaining to the second embodiment according to the present invention.

FIG. 17 is a view of a readable range of the reader antenna in the second embodiment.

FIG. 18 is a view of a result of data reading in the second embodiment.

FIG. 19 is a view of another example of a postal envelope to which an RF tag module used in the second embodiment is affixed.

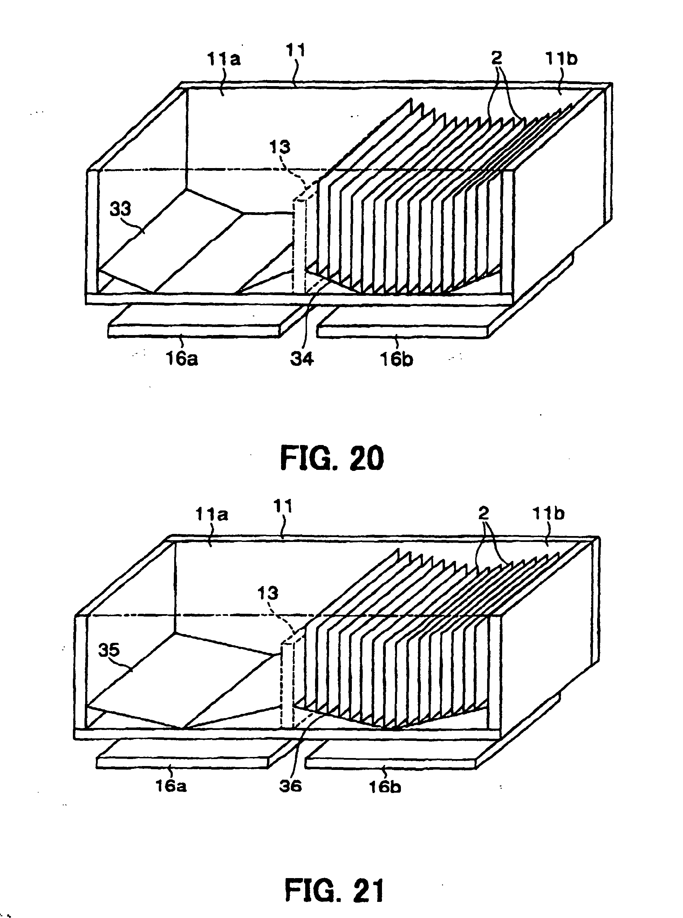

FIG. 20 is a perspective view of an example of a modified container in the second embodiment.

FIG. 21 is a perspective view of an example of another modified container in the second embodiment.

FIG. 22 is a perspective view of an example of still another modified container in the second embodiment.

FIG. 23 is a perspective view of an example of still another modified container in the second embodiment.

FIG. 24 is a view of a general structure pertaining to a third embodiment according to the present invention.

FIG. 25 is a view of a general structure pertaining to a second example comparative to the present invention.

FIG. 26 is a view of a general structure pertaining to a third example comparative to the present invention.

FIG. 27 is a view of a general structure pertaining to a fourth example comparative to the present invention.

FIG. 28 is a view of a general structure of an antenna device pertaining to an fifth example comparative to the present invention.

FIG. 29 is a view illustrating a state in which a container is placed on the antenna device in the fifth example comparative to the present invention.

FIG. 30 is a view of a perspective view of a general structure of an antenna device pertaining to 6th example comparative to the present invention.

FIG. 31 is a view of a 7th example comparative to the present invention with examples of driving patterns in which a plurality of reader antennas are arranged in line.

FIG. 32 is a view of other antenna driving patterns in a seventh comparative example.

FIG. 33 is a view of another antenna driving pattern in the seventh comparative example.

FIG. 34 is a view of some examples of driving patterns in which a plurality of reader antennas are arranged in two lines, in a eight example comparative to the present invention.

Preferred embodiments of and examples comparative to the present invention will now be described in more detail with reference to the accompanying drawings. However, the same numerals are applied to the similar elements in the drawings, and therefore, the detailed descriptions thereof are not repeated.

First comparative example

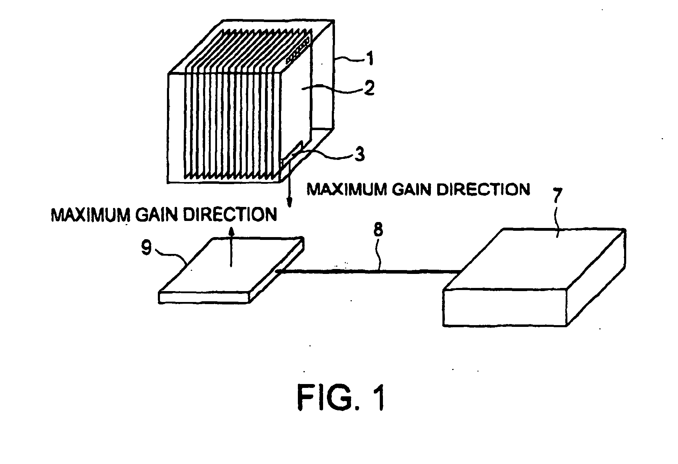

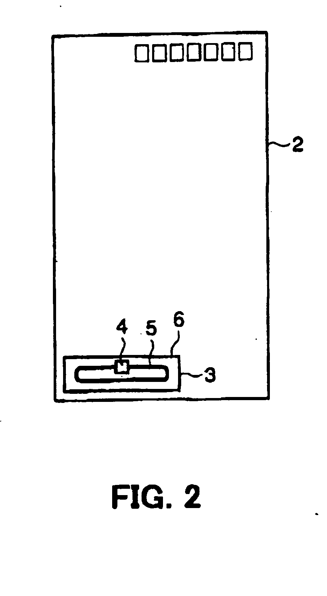

A first example comparative to the present invention will now be described in conjunction with FIGS. 1 and 2. FIG. 1 shows an article container 1 in which a plurality of postal envelopes 2 as an article are arranged face to face with each other. The article container 1 containing the postal envelopes 2 such as registered mails is used when the postal envelopes are transferred from one post office to another. In FIG. 1, the internal postal envelopes 2 are shown visible through a side of the article container 1.

In FIG. 2, an RF tag 3 is affixed onto a surface of the postal envelope 2 at its lower left edge. This RF tag 3 is one commercially available on the market and is formed such that an IC chip 4 and a tag antenna 5 connected to the chip are wholly coated with coating material 6. The tag antenna 5 has a basic structure of, for example, either a dipole or folded-dipole antenna. The RF tag 3 does not carry a battery; the internal IC chip 4 is operated by the power that is obtained by detecting a radio wave received.

Under the article container 1 there is disposed a reader antenna 9, comprising a plane antenna, which is connected to an interrogator 7 through a coaxial cable 8. For this reader antenna 9, a patch antenna or printed dipole antenna is preferable to use. This antenna may be of a bar type instead of a plane type.

A plurality of the postal envelopes 2 are contained within the article container 1, being arranged face to face with each other in a direction orthogonal to the maximum gain directions of the RF tags 3 affixed in the postal envelopes 2 so that the maximum gain directions of the RF tags 3 are uniformly oriented. In addition, the respective postal envelopes 2 are arranged lengthwise face to face with each other so that the maximum gain direction of the postal envelopes 2 are directed to the reader antenna 9.

Since the reader antenna 9 is disposed so that a plane of polarized wave of the reader antenna 9 conforms to those of the tag antennas 5 of the RF tags 3 and the maximum gain direction of the reader antenna 9 is oriented to a basal plane of the article container 1, the maximum gain directions of the RF tags 3 and that of the reader antenna 9 are opposed to each other.

Because of the uniform arrangement of the planes of polarized waves of both antennas, a radio wave radiated from the reader antenna 9 is efficiently received by the RF tags 3 of the respective postal envelopes 2, and thereby the interrogator 7 can positively read data from the RF tags 3 on the respective postal envelopes 2 through the reader antenna 9.

This RF tag reading apparatus permits the interrogator 7 to read data from the respective RF tags 3 by a single operation of reading, even if a large number of postal envelopes 2 each with a RF tag 3 installed are contained in the simply structured article container 1.

First embodiment

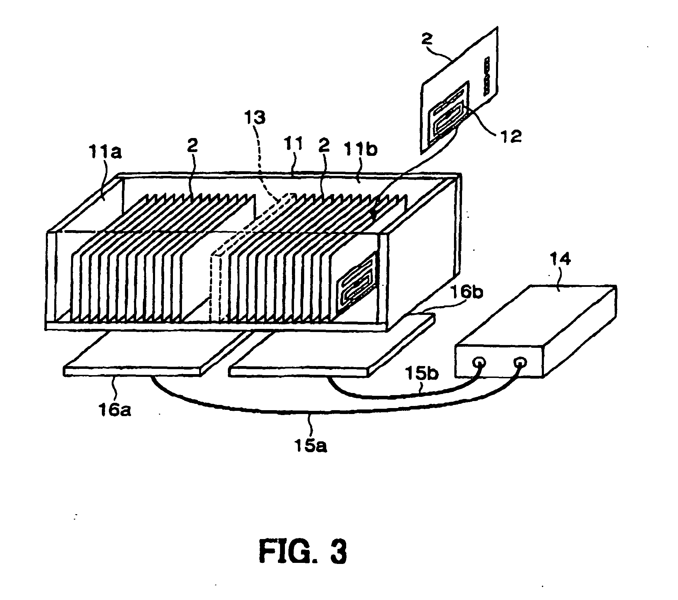

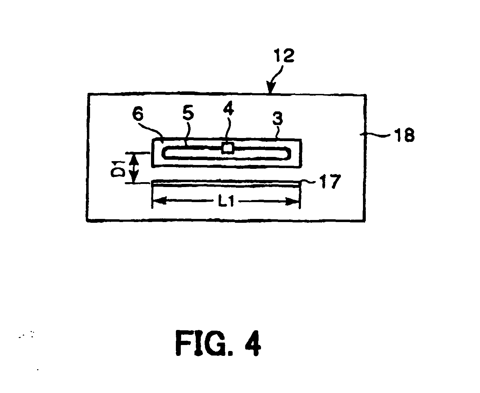

In FIGS. 3 and 4, the postal envelopes 2, each of which is provided with an RF tag module 12 that comprises the RF tags 3 and a reflector 17, are arranged sideways face to face with each other within an article container 11. Each RF tag module 12 is affixed to the postal envelope 2 in the vicinity of one side edge of the postal envelope 2. FIG. 3 shows the structure in a state wherein a front wall is removed so that the postal envelopes 2 contained in the article container 11 can be seen.

The article container 11 is internally partitioned into two compartments 11a and 11b by a partition board 13. A reader antennas 16a and 16b are disposed under basal planes of the compartments 11a and 11b, respectively. Reader antennas 16a and 16b are planar square-antenna. An interrogator 14 is connected to the reader antennas 16a and 16b via coaxial cables 15a and 15b, respectively. Since an RF tag reading apparatus comprising the reader antenna 16a and the compartment 11a is identical to an apparatus comprising the reader antenna 16b and the compartment 11b, only description for the apparatus of the latter will be made.

As shown in FIG. 4, the RF tag module 12 comprises the RF tags 3 and the reflector 17 constituting a directivity providing means, which are provided on a holding member 18 of a thin insulating material. The holding member 18 is made of paper, plastic, vinyl chloride, etc.

Since the tag antenna 5 is either a bar dipole type or folded dipole type, the tag antenna 5 and the reflector 17 are arranged in parallel and spaced at D1 therebetween. Assuming a wavelength of a carrier that is used in communications between the RF tags 3 and the interrogator 14 to be X, length of the reflector 17, L1, and space D1 are set to $\lambda/2$ and $\lambda/8$, respectively. The length of the reflector 17, L1, and space D1 can be arbitrarily determined in design considering the size of the RF tag module, as long as L1 is greater than $\lambda/2$ and D1 is less than $\lambda/8$. The reflector 17 uses a conductive material. The reflector 17 is made such that a copper film is cut into a predetermined form, and is affixed to the holding member 18 by an adhesive tape. Alternative ways of the formation of the reflector 17 may be that a copper or aluminum tape with an adhesive on one side is affixed onto the holding member, or conductive ink is printed on the holding member 18 in a desired form, or a copper plated holding member 18 is etched into a desired pattern. In such RF tag module 12, because the maximum gain direction of the tag antenna 5 of the RF tag 3 directs from the reflector 17 to the RF tag 3, a reading capability of the RF tag 3 can be improved.

The RF tag module 12 is affixed to the postal envelope 2 such that the RF tag 3 is situated close to an edge line of the postal envelope 2 than to the reflector 17 in nearly parallel with the edge line. The respective postal envelopes 2 are arranged sideways face to face with each other within the article container 11 so that each one edge line of the respective postal envelopes 2 is directed to a basal plane of the article container 11.

In this arrangement, each of the RF tag modules 12 is disposed so that the RF tag 3 is closer to the reader antenna 16b while the reflector 17 is further to it, and the maximum gain direction of the tag antenna 5 of the RF tag 3 is toward the reader antenna 16b. That is, a plurality of the postal envelopes 2 each with the RF tag 3 affixed are now arranged face to face with each other within the article container 11 so that the maximum gain directions of the respective tag antennas 5 are arranged uniformly. Also, the maximum gain of the tag antennas 5 of the RF tags 3 have been improved by the installation of the reflector 17 comparing to one in the first embodiment as described.

The reader antenna 16b is a plane antenna and is arranged so that a plane of a polarized wave from/to the reader antenna 16b becomes nearly parallel with the tag antenna 5 of the RF tag 3. Besides, since the maximum gain direction of the reader antenna 16b is toward a basal plane of the article container 11, the respective maximum gain directions of the RF tag 3 oppose that of the reader antenna 9.

Since in this arrangement planes of polarized waves of the reader antenna 16b and the tag antenna 5 of the RF tag 3 conform to each other, a radio wave transmitted from the reader antenna 16b can be efficiently received by each of the RF tags 3 of the postal envelopes 2. In addition, because the respective maximum gain directions of the reader antenna 16b and the tag antenna 5 of the RF tag 3 oppose to each other, the interrogator 7 can certainly read data from each of the RF tags 3 of the postal envelopes 2 by the reader antenna 16b.

In this face-to-face arrangement of the postal envelopes 2 within the article container 11, if a spacing between the neighboring RF tag modules 12 becomes, for example, less than 3 mm, a distance D1 between the tag antenna 5 and the reflector 17 affects the readability. In this embodiment, to assure the reading from each of the RF tags 3 even when the postal envelopes 2 are arranged face to face with each other in the article container 11, distance D1 between the tag antenna 5 and the reflector 17 is set to less than $\lambda/8$.

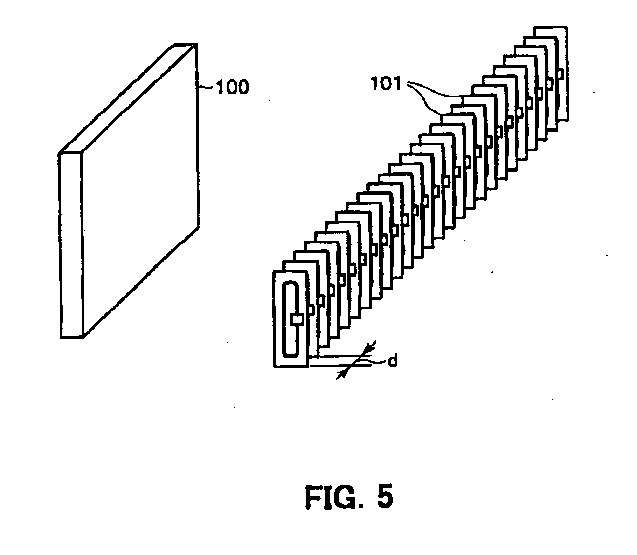

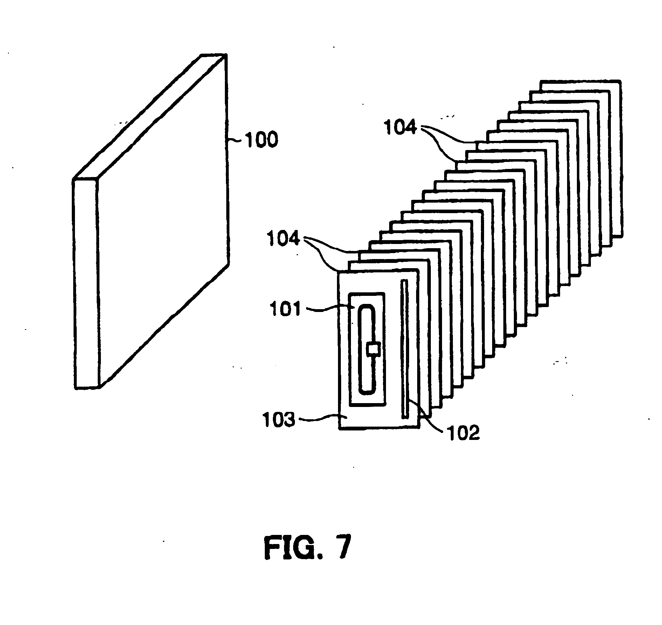

Experimental readings by the postal envelopes 2 each with an existing RF tag installed are shown in FIG. 5, and experimental readings using the RF tag modules 12 are shown in FIG. 7.

In experimental readings in FIG. 5, a reader antennas 100 having a structure identical to the reader antenna 16b and multiple RF tags 101 each having an identical structure to the RF tag 3 are used. The RF tags 101 are arranged being spaced by a predetermined interval d in the arrangement direction. The reader antenna 100 and each of the RF tags 101 are arranged so that the maximum gain direction of the reader antenna 100 is oriented nearly orthogonal to arrangement direction of the RF tags 101.

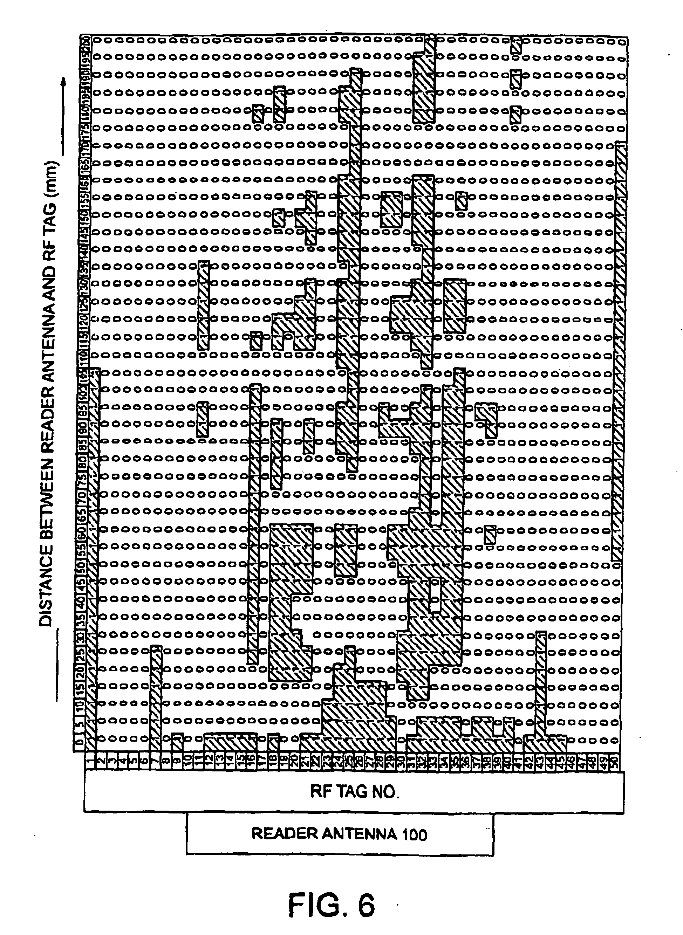

The RF tag 101 utilizes a conventionally known RF tag that uses a carrier having a frequency of 2.45 GHz. In this experiment, 50 of the RF tags 101 are arranged in line at a space of d = 3 mm among the respective RF tags. Reading of data was taken from each of the RF tags 101 while a distance between the reader antenna 100 and the line of the RF tags 101 is varied in a range of 0 to 200 mm. The result of the readings is shown in FIG. 6.

In FIG. 6, the axis of ordinate represents by a number in 50 of RF tags 101, while the abscissa axis represents a distance between the reader antenna 100 and the line of the RF tags 101 by an increment of 5 mm. "1" in a cell at an intersection of an RF tag number and a distance indicates that the data reading was successfully made, while "0" indicates a failure in the reading. Regions filled with diagonal lines indicate where the readings were made successfully. This result shows that, when the RF tags 101 are arranged at an interval of 3 mm, an interrogator 100 cannot certainly read data.

In the experimental example shown in FIG. 7, readability for 50 of the RF tags 101 was measured, wherein 50 of the RF tag modules 104 are similarly arranged at an interval of 3 mm; in each of the RF tag modules 104, the RF tag 101 and the reflector 102 are held on the holding member 103; and the line of the RF tag modules 104 and the reader antenna 100 was held at a constant distance.

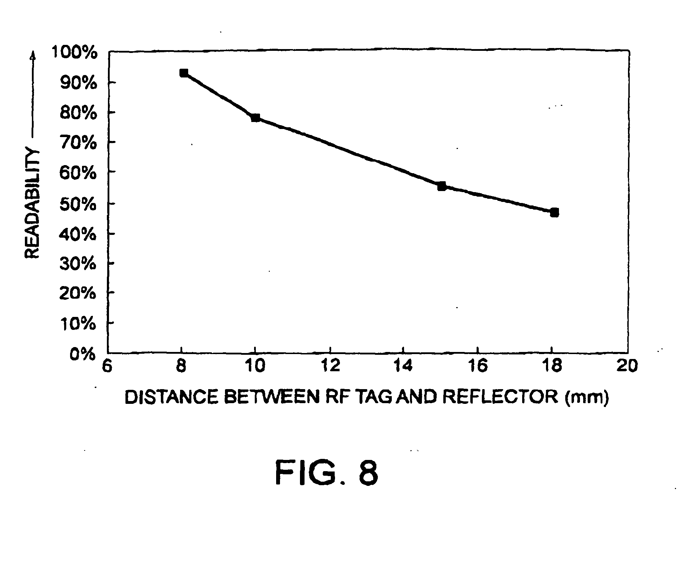

In this measurement, distant D1 between the RF tag 101 and the reflector 102 in the RF tag module 104 is set to four values 8, 10, 15, and 18 mm, and corresponding measurements of the data reading were made. The measurement result was shown in FIG. 8. The result of the measurements indicated that, if the distant between the RF tag 101 and the reflector 102 exceeds 15 mm, the readability drops to less than 50%, suggesting that the distance between them be preferably set to less than 15 mm. Since this distance corresponds to approximately 1/8 of a wavelength of a frequency 2.45 GHz, the distance between them would be set to less than $\lambda/8$ of a carrier wave. In this connection, the length of the reflector 102 is set to $\lambda/2$ as set for the reflector 17.

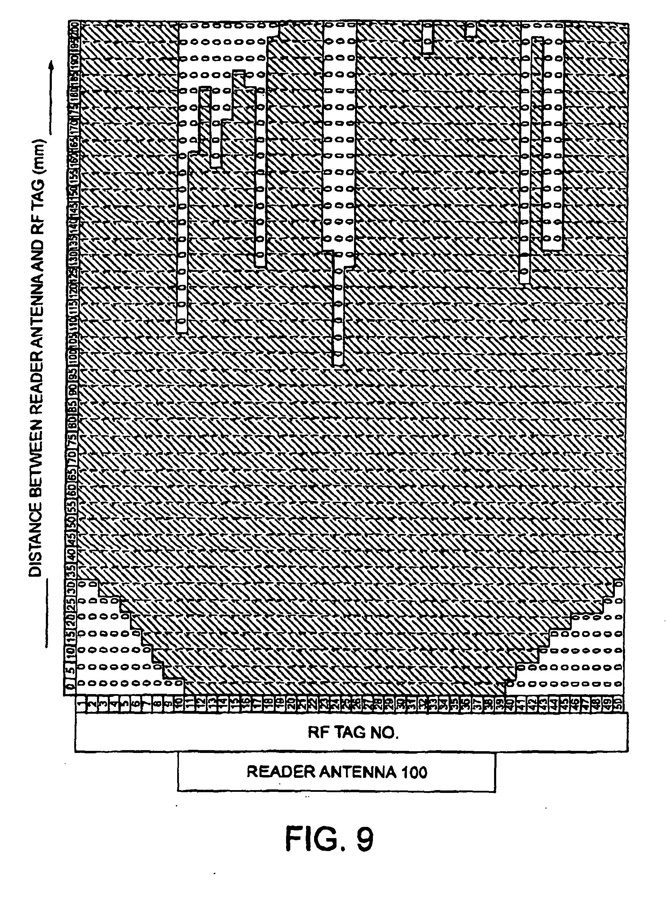

Next, 50 of the RF tag modules 104, in each of which the distance between the RF tag 101 and the reflector 102 was set to 8 mm, were spaced at 3 mm. Then, while the distance between a line of the RF tag modules and the reader antenna 100 was varied in a range between 0 and 200 mm, data readings from the individual RF tags were made. The measurement result was shown in FIG. 9.

In FIG. 9, the axis of ordinate represents a number of the respective RF tags 101 in 50 RF tag modules 104, while the abscissa axis represents a distance by an increment of 5 mm. "1" in a cell at an intersection of an RF tag number and a distance indicates that the data reading was successfully made, while "0" indicates a failure in the reading. Regions filled with diagonal lines indicate where the readings were made successfully. From this result, we learnt that data can be successfully read out from all RF tags 101 at the distance in a range of between 35 and 95 mm.

From the results in the above we further learnt that, even if the RF tag module 104, in which distance D1 between the RF tag 101 and the reflector 102 is set to 8 mm, is affixed to a postal envelope 105 as a planar article, wherein a number of such an RF module are arranged face to face with each other, the interrogator could read data from the RF tags 101 on the respective postal envelopes 101 through the reader antenna 100, as long as a distance between the reader antenna 100 and the line of the RF tags 101 is held within a range between 35 mm and 95 mm, and the RF tags 101 are spaced at 3 mm.

Accordingly, even in the case that a plurality of the postal envelopes 2 are contained and arranged face to face with each other at an interval of some 3 mm between the RF tags on the respective postal envelopes 2 within the article container 11, as shown in FIG. 3, the interrogator 14 can communicate with the RF tag on each of the postal envelopes 2 and certainly read data from each of the RF tags 3, as long as a distance between the reader antennas 16a and 16b, and the RF tags is held in a range of between 35 mm and 95 mm.

For example, assuming that an envelope-containable width of the article container 11 is some 60 cm and an interval between the RF tags 3 is 3 mm, the container would contain 200 postal envelopes. This size is considered appropriate to carry as the article container 11.

In addition, since the article container 11 is merely partitioned into two compartments 11a and 11b by the partition board 13 corresponding to the respective readable ranges of the reader antenna 16a and 16b, its structure is extremely simple.

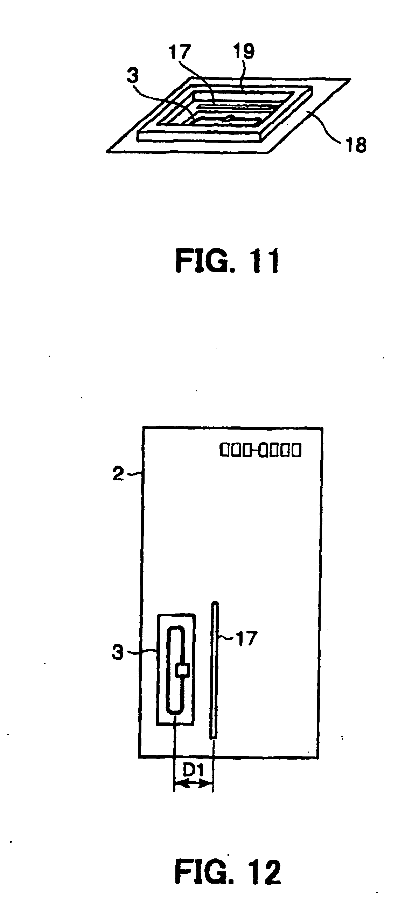

Although, in the above-described embodiment, the structure in which the RF tag 3 and the reflector 17 are affixed to the holding member 18 was used as the RF tag module, the invention does not restrict to such a structure. It may be such a structure, as shown in FIG. 11, in which a spacer 19 of an appropriate thickness formed so as to surround the RF tag 3 and the reflector 17 is installed on the holding member 18. In this case, if the thickness of the spacer 19 is set to some 3 mm, the data reading can be assured even if the postal envelopes 2 are lined so close together because an interval between neighboring RF tags can be securely maintained at some 3 mm.

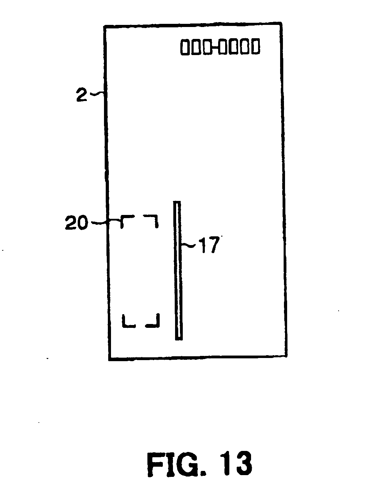

Although description was made for a structure of the postal envelope 2 with the RF tag module 12, in which the RF tag 3 and the reflector 17 are affixed to the holding member 18, the invention does not restrict such a structure. It may be such a structure, as shown in FIG. 12, that the RF tag 3 and the reflector 17 are directly affixed to the postal envelope 2. In this case, distance D1 between the RF tag 3 and the reflector 17 is set to less than $\lambda/8$ of a carrier wave. When, as in this case, the RF tag 3 and the reflector 17 are directly affixed to the postal envelope 2, a marking 20 at a position where the RF tag 3 would be affixed and the reflector 17 at a predetermined distance D1 from the marking may be printed, as shown in FIG. 13. By use of the marking 20, the RF tag can be easily correctly installed. Thereby, distance 1 between the RF tag 3 and the reflector 17 can be very accurately set to less than $\lambda/8$.

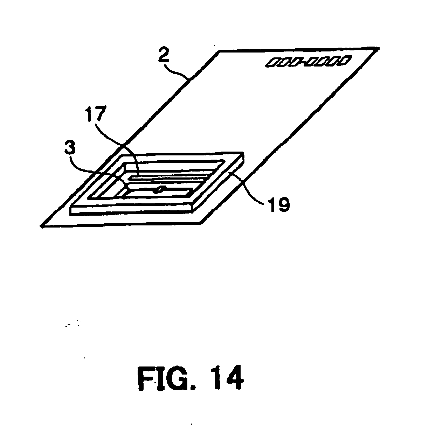

Alternatively, after the RF tag 3 and the reflector 17 are directly affixed to the postal envelope 2, a spacer 19 may be directly affixed to the postal envelopes 2, as shown in FIG. 14.

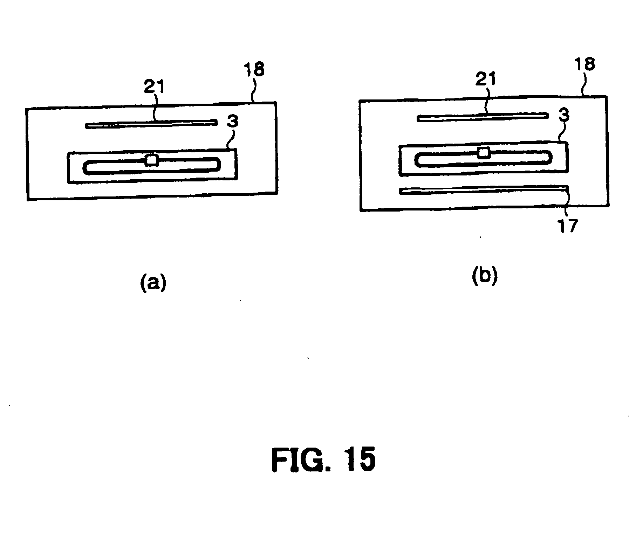

The RF module may be such a structure, as shown in FIG. 15(a), that the RF tag 3 and a wave-guide 21 as a directivity-providing means are disposed on the holding member 18, providing a predetermined space between them; or, a structure, as shown in 15(b) that the reflector 17, the wave-guide 21 as directivity-providing means, and the RF tag 3 are arranged on the holding member 18 at predetermined spaces among them. In these cases, the holding member 18 is not necessarily required, and the reflector 17 and the wave-guide 21, and the RF tag 3 may be directly affixed on the postal envelopes 2 instead. A spacer 19 may also be added to them.

Second embodiment

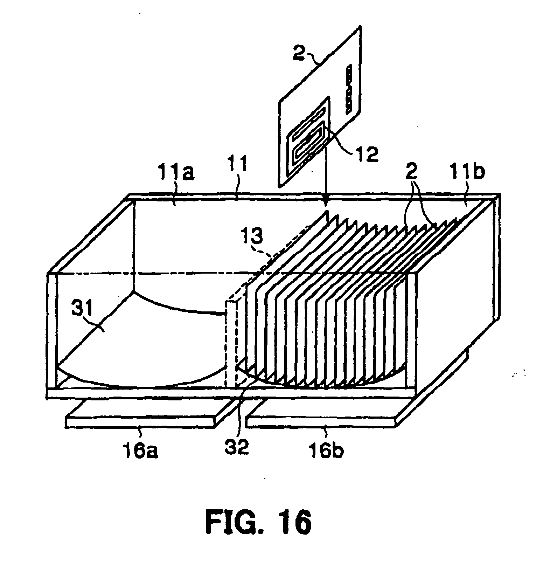

As shown in FIG. 16, the article container 11 is partitioned into compartments 11a and 11b, and base plates 31 and 32, each of which is concaved upward and bent relative to a line of arranging the postal envelopes 2, are disposed. A plurality of the postal envelopes 2 are contained and arranged face to face with each other in the container on the concaved surface of the base plates 31 and 32. Hereinafter, since an RF tag reading apparatus structured by the reader antenna 16a and the compartment 11a having the base plate 31 is similar to that structured by the reader antenna 16b and the compartment 11b having the base plate 32, description thereof will be made only for the latter apparatus. The reader antenna 16b is disposed so that a center of the base plate 32, at the lowest thereof, and a center of the reader antenna 16b correspond to each other. Positional relation between the reader antenna 16b and the RF tags affixed to the respective postal envelopes 2 is such that a maximum gain direction of the reader antenna 16b nearly orthogonally crosses an arranging direction of the RF tags. The reader antenna, the RF tags, and the reflector as a directivity-providing means are to be arranged in a sequential order in the maximum gain direction of the reader antenna 16b connected to the interrogator 14.

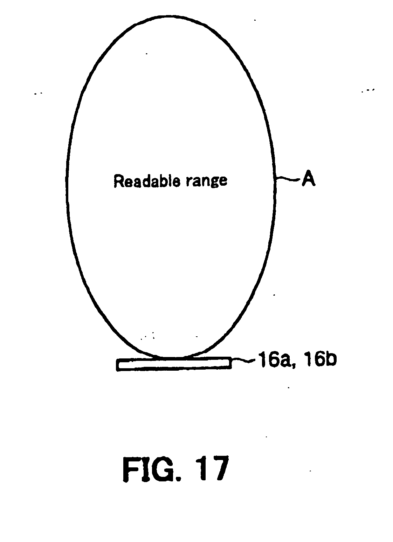

FIG. 17 indicates a readable range by the reader antenna 16b as a plane antenna. Because a radiation range that a plane antenna covers generally forms an oval or the like, an electric field strength decreases even in the vicinity of the antenna lowers in the longitudinal direction of the antenna as it goes further from the center of the antenna. As has become understood from the result shown in FIG. 9, the antenna cannot read data from the RF tags even in the vicinity of the antenna if it goes apart from the center in the longitudinal direction of the antenna. The line A in FIG. 17 defines a boundary between a readable area and unreadable area. Accordingly, the width in the arranging direction of the postal envelopes 2 within the compartment 11b must be set narrower than the maximum width of the data readable range of the reader antenna 16b.

By placing a plurality of the postal envelopes 2 on the concaved base plate 32, the RF tag modules 12, which are affixed on the respective postal envelopes 2, would be arranged face to face with each other making a similar form to the bent base plate 32.

The distance between the reader antenna 16b and the RF tag module 12 of the respective postal envelopes 2 within the compartment 11b would become smallest in the central part of the antenna, increase as it goes further from the center and become the greatest in the vicinity of the ends of the antenna. Accordingly, every one of the RF tag modules 12 affixed on the respective postal envelopes 2 would be disposed within the boundary line A that defines the readable range of the reader antenna 16b.

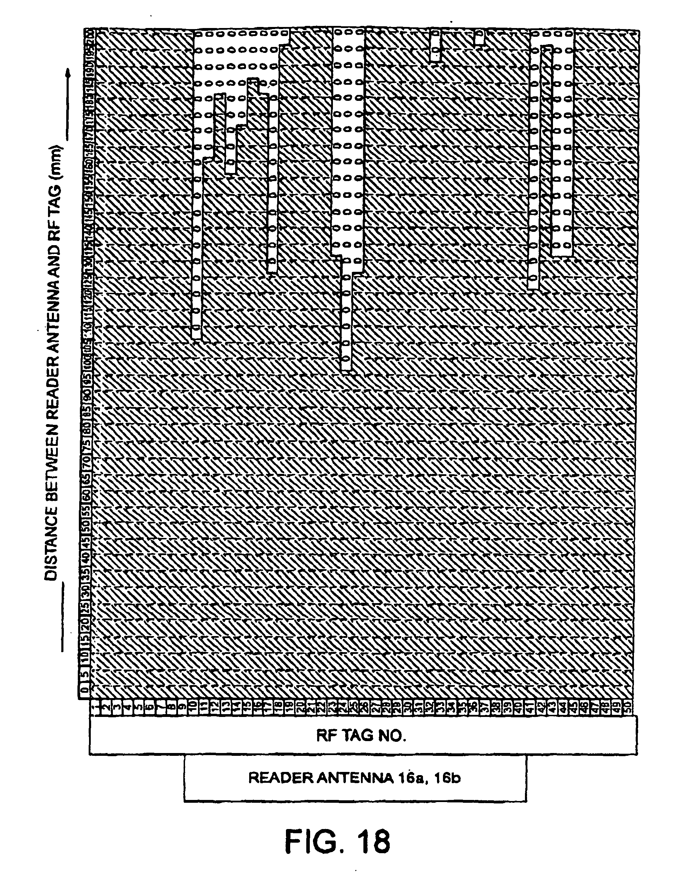

To evaluate data readability by the interrogator 14 from each of the RF tags 3 of the RF tag modules 12 connected to the reader antenna 16b, 50 pieces of the postal envelopes 2 are contained in the compartment 11b. The test result is shown in FIG. 18. The result showed by the shaded area that all of the RF tags 3 fall within the boundary line A of the readable range of the reader antenna 16b, and the interrogator 14 could successfully read data from all of RF tags including ones located at the ends of the reader antenna 16b. The same can be said as to the compartment 11a.

FIG. 18 shows the result of evaluation of the data reading that were made using the article container 11 provided with the bent base plate 32 within the compartment 11b. The abscissa axis represents a distance between the reader antenna 16b and the base plate in the article container 11. The result exhibits that data readings from the RF tags were successfully made in the total area up to a distance of 95 mm of the reader antenna 16b from the base plate in the article container 11.

By providing the base plate 32 that is bent with its concaved surface directing upward in the bottom of the compartment 11b within the article container 11, the reader antenna 16b can certainly read data of the RF tag 3 affixed to each of the postal envelopes 2 in a range of distance between 0 and 95 mm from the base end surface of the article container 11. This permits installation of the reader antenna 16b on the base end surface of the article container 11 integrating the antenna with the container. Since the bent base plates 31 and 32 are only disposed within the compartments 11a and 11b of the article container 11, respectively, which are partitioned by the partition board 13 therein, its structure is simple.

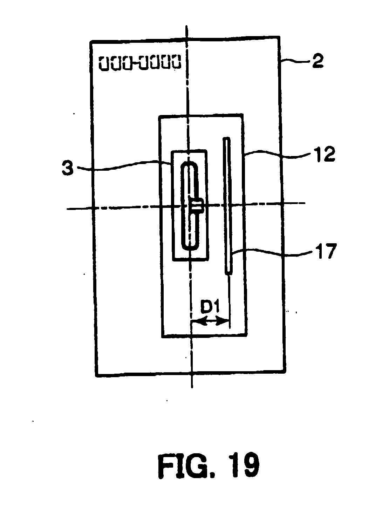

In this embodiment, description was made for a structure in which the RF tag module 12 is installed at one end of the postal envelope 2. This invention is not limited to this structure. The RF tag module 12 may be affixed to the postal envelope 2 in such a manner, as shown in FIG. 19, that the RF tag 3 of the RF tag module 12 is situated at a center of the postal envelope 2. This structure allows arrangement of the postal envelopes 2 within the article container 11 at a rotation of 180 degree on the axis which passes the center of the envelope, and along which the reflector 17 and the RF tag 3 are lined without causing any trouble in the data reading from the RF tag 3. This increases flexibility of orientation of the postal envelopes 2 to be contained in the article container 11. In this case, the RF tag 3 and the reflector 17 may be directly affixed to the postal envelopes 2, without using the form of the RF tag module 12.

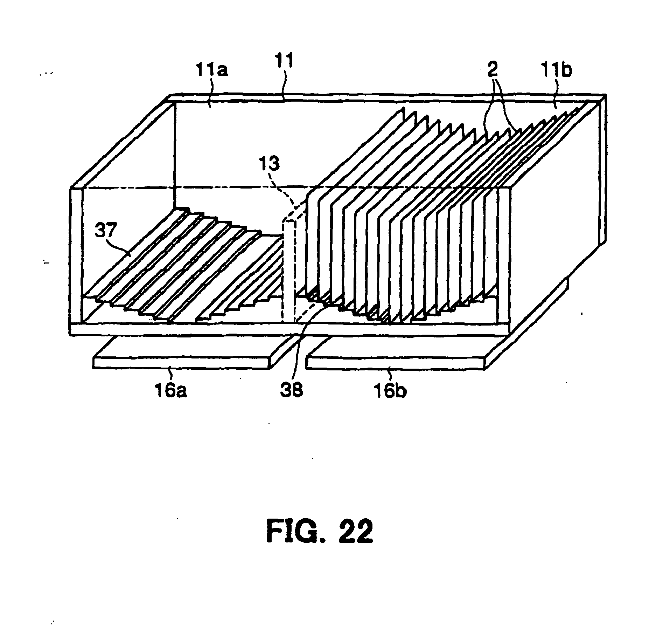

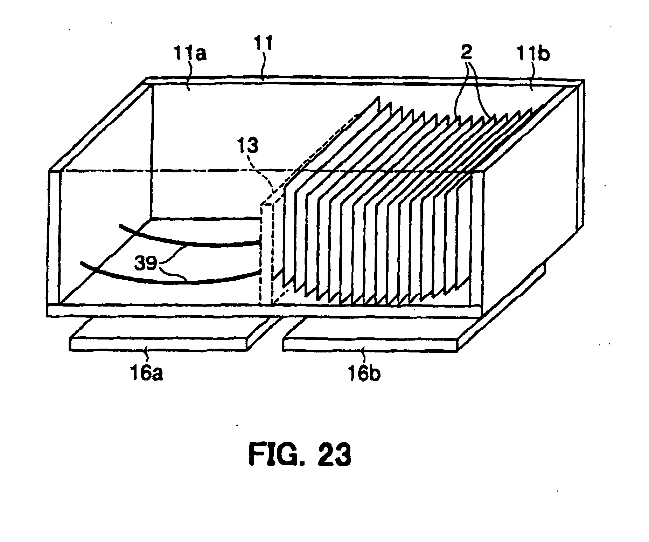

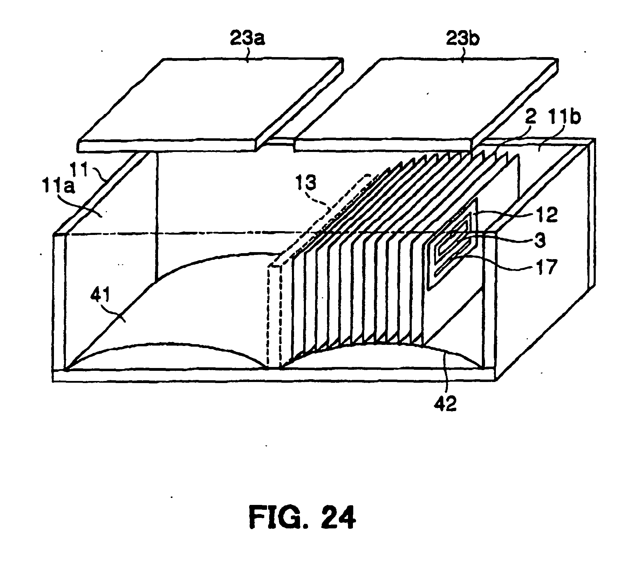

Although in the forgoing embodiment the formation of the base plates 31 and 32 was shown as being bent hyperbolic, this invention is not restricted to this formation. The base plate may be provided in a trapezoidal form as in base plates 33 and 34 shown in FIG. 21, in a V-shape as in the ones of 35 and 36 shown in FIG. 21, or in a mixture of V and stair-like forms as in the ones 37 and 38 shown in FIG. 22. Plural wires 39, which are bent hyperbolic as shown in FIG. 23, may also be used in place of these plates.

Third embodiment

In FIG. 24, the article container 11 is partitioned into compartments 11a and 11b, in which base plates 41 and 42 are disposed, each of the base plates being bent relative to arranging line of the postal envelopes 2 directing its convex surface upward. Reader antennas 23a and 23b, formed as plane antennas, are arranged so that a respective top, central part of the base plates 41 and 42, corresponds to a center of the respective reader antennas. The postal envelopes 2 are arranged face to face with each other on the respective convex surfaces of the base plates 41 and 42 directing each one edge line of the respective postal envelopes 2 that are closer to the RF tags 3 of the RF tag module 12 towards upper part of the article container 11. Hereinafter, since an RF tag reading apparatus structured by the reader antenna 23a and the compartment 11a having the base plate 41 is similar to one structured by the reader antenna 23b and the compartment 11b having the base plate 42, description will be made only for the latter apparatus.

The RF tag 3 and the reflector 17 are arranged in order viewing from the reader antenna 23b. Accordingly, the maximum gain directions of the RF tags 3 are directed to reader antenna 23b. In this case, a positional relationship between the reader antenna 23b and the RF tag 3 affixed to each of the postal envelopes 2 is such that the maximum gain direction of the reader antenna 23b is nearly orthogonal to the arranging direction of the RF tags 3. Accordingly, the reader antenna 23b, the RF tag 3, and the reflector 17 as a directivity-providing means are arranged in order toward the maximum gain direction of the reader antenna 23a.

The reader antenna 23b having radiation characteristics as indicated in FIG. 17 transmits a radio wave towards the article container 11. In FIG. 24, a radio wave from the reader antenna 23b is transmitted downward. The RF tags 3 of the postal envelopes 2 are contained and arranged within the compartment 11b with the convex directed upward as if an envelope curve of the postal envelopes 2 depicts a circular arc so that all the RF tags fall within the readable range of the reader antenna 23b. Accordingly, the interrogator connected to the reader antenna 23b can certainly read data from all the RF tags 3 of the postal envelopes 2. In this embodiment as well, the structure is simple because the bent base plates 41 and 42 are only provided at the bottoms of the two compartments 11a and 11b, respectively, which are partitioned by the partition board 13 within the article container 11.

Second comparative example

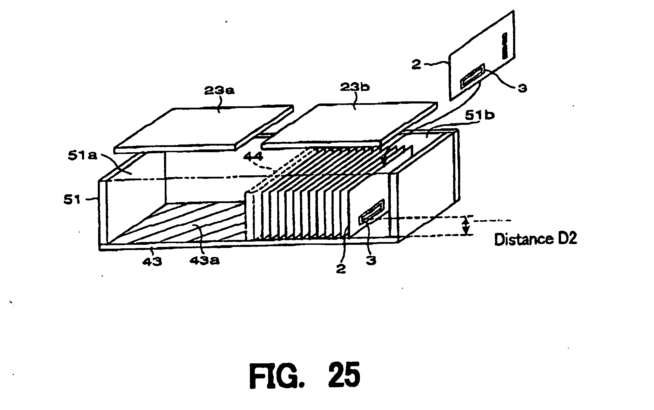

In this example, as shown in FIG. 25, only RF tag 3 is installed to the postal envelope 2, being arranged closer to one edge line of the envelope in nearly parallel with the edge line. An article container 51 is partitioned by a partition board 44 into two compartments 51a and 51b. The base plate of the article container 51 is constituted by a reflection board 43; a reflection side 43a is directed inward in the article container 51. The reader antennas 23a and 23b are disposed above the article container 51 and transmit a radio wave downward. The postal envelopes 2 are contained and arranged face to face with each other within the respective compartments 51a and 51b in the article container 51 with one edge line of each of the envelopes placed on the reflection plate 43. In this case, the position on the envelope where the RF tag is affixed is determined so that a distance D2 between the RF tag 3 and the reflection surface 43a becomes an integral multiple of a half of a wavelength $\lambda$ of a carrier.

Hereinafter, since an RF tag reading apparatus structured by the reader antenna 23a and the compartment 51a having a base plate 43 is similar to that structured by the reader antenna 23b and the compartment 51b having the base plate 43, description will be made only for the latter apparatus.

In the structure shown in FIG. 25, part of radio wave transmitted from the reader antenna 23b is reflected on the reflection surface 43a and received by the antenna of the RF tag 3. Other part of radio wave transmitted from the reader antenna 23b is received directly by the antenna of the RF tag 3. Therefore, the RF tag 3 receives both the direct wave directly coming from the reader antenna 23b and the reflected wave coming through reflection on the reflection surface 43a, and combines them.

Because distance D2 between the RF tag 3 and the reflection surface 43a is set to an integral multiple of a half of a wave length $\lambda$ of a carrier, two phases of the direct wave and reflected wave conform to each other and thereby the reception power of the RF tag 3 can be boosted. The same effect can be applied to a process of returning a response to an inquiry from the interrogator. Thus, even when the postal envelopes 2 are arranged face to face with each other within the article container 51 at an interval of some 3 mm among the respective RF tags 3, data reading from each of the RF tags 3 can be certainly achieved.

By constituting the base plate of the article container 51 by the reflection board 43 in place of the reflectors 17 that is provided on the postal envelopes 2, sure data reading can be achieved even if the RF tags alone are provided on the postal envelopes 2.

Although in this example the base plate of the article container 51 is constituted by the reflection board 43, this example is not limited to such a structure. A top board of the article container 51 may be constituted by a reflection board. In this case, the postal envelopes 2 are to be arranged within the article container 51 so that each one edge line of the respective envelopes closer to the respective RF tags 3 is directed toward the top board of the article container 51. Also, a position where the RF tag is affixed on the envelope is determined such that distance D2 between the RF tag 3 and the reflection surface 43a of the reflection board 43 becomes an integral multiple of a half of a wavelength $\lambda$ of a carrier. The reader antenna 23b is disposed under base end surface of the article container 51, and is made to transmit a radio wave upward.

Third comparative example

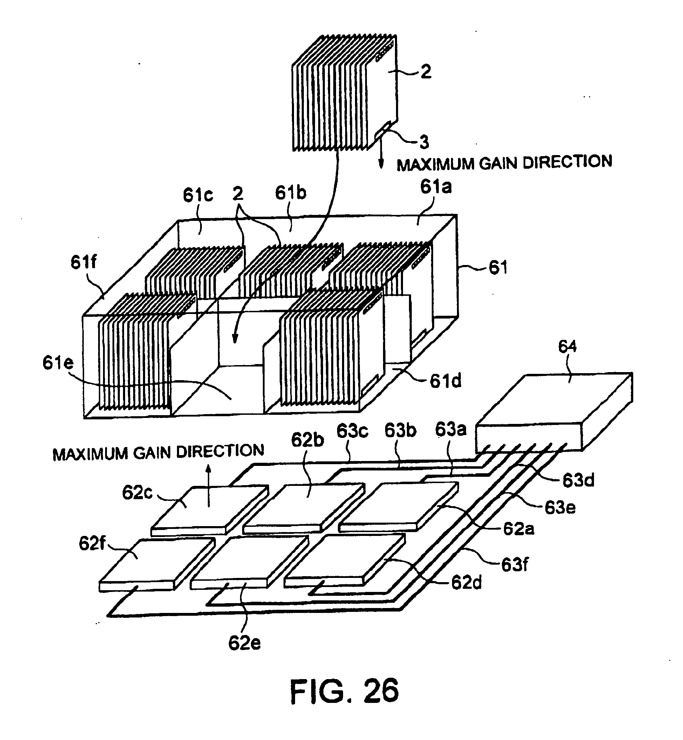

In FIG. 26, an article container 61 is divided into six compartments 61a, 61b, 61c, 61d, 61e, and 61f in two rows and three lines by a partition board. Each of the compartments 61a through 61f contains a plurality of the postal envelopes 2 such that each of the postal envelopes stands with the longer side upward. The RF tag is affixed to the envelope at the lower edge on the front face such that the maximum gain direction thereof is directed downward. Thus, the plurality of the postal envelopes 2 would be contained and arranged in each of the compartments 61a though 61f face to face with each other in a direction orthogonal to the maximum gain directions of the respective RF tags such that the maximum gain directions of the respective RF tags are oriented uniformly.

Six reader antennas 62a through 62f, each of which is formed of a plane antenna, are arranged below the article container 61 corresponding to the respective compartments 61a through 61f and connected to an interrogator 64 via coaxial cables 63a though 63f, respectively. The reader antennas 62a, 62b, and 62c correspond to compartments 61a through 61c in one line, and reader antennas 62d, 62e, and 62f correspond to compartments 61d through 61f in the other line.

The reader antennas 62a through 62f are arranged such that the respective planes of polarized waves from the reader antennas are oriented nearly parallel with tag antennas 5 of the RF tags 3 on the plurality of the postal envelopes 2 contained in the respective compartments 61a through 61f. Thus, the maximum gain directions of the reader antennas 62a through 62f are directed toward the base of the article container 61, and thereby the maximum gain directions of the RF tags 3 in the respective compartments 61a through 61f and those of reader antennas 62a though 62f are opposed to each other.

Each of the reader antennas 62a though 62f is provided with a feeder terminal at its side. The reader antennas 62a and 62f are connected to the interrogator 64 via the coaxial cables 63a through 63f, respectively, which are also connected to the respective feeder terminals. The reader antenna 62a though 62f are arranged so that sides in the reader antennas 62d, 62e, and 62f on which the feeder terminals are not installed face with the respective counterparts of the reader antenna 62a, 62b, and 62c. In FIG. 26, the reader antennas 62a and 62d are arranged so that the other side of one with the feeder terminal installed in the reader antenna 62a faces with the other side of one with feeder terminal installed in the reader antenna 62d. Like arrangements are made in the relation between the reader antennas 62b and 62e, and relation between 62c and 62f. As to the reader antennas 62a, 62c, 62d, and 62f, sides on which the respective feeder connectors are installed are not limited to the above-mentioned. The feeder terminals of the respective antennas may be provided on any of peripheral sides of the reader antennas that are disposed on a horizontal plane. As to the reader antennas 62a and 62c, therefore, the respective feeder terminals may be provided on the other sides of ones facing with the reader antenna 62b sandwiched therebetween. Similarly, as to the reader antennas 62d and 62f, the respective feeder terminals may be provided on the other sides of ones facing the reader antenna 62e sandwiched therebetween.

Since the article container 61 is partitioned into six compartments, in each of which a plurality of the postal envelopes 2 can be contained, the container can contain a large number of the postal envelopes 2 at a time. Since it is so structured that planes of polarized waves from/to the respective reader antennas 62a through 62f and from/to the tag antennas 5 of the RF tags affixed to the respective postal envelopes 2 conform to each other, the RF tag antennas can efficiently receive radio waves from the respective reader antenna 62a through 62f.

The interrogator 64 reads data recorded in the RF tag 3 of the respective postal envelopes 2 contained in the respective compartments 61a through 61f of the article container 61 by sequentially driving the respective reader antenna 62a through 62f. This data reading by the interrogator 64 is performed, for example, such that, first, the reader antenna 62a is operated to read data from the RF tags of the plural postal envelopes 2 contained in the compartment 61a, and then the reader antenna 62b is operated to read data from the RF tags of the plural postal envelopes 2 contained in the compartment 61b. Similar sequential operations for 62c through 62f are continued until readings from all the RF tags 3 of the plural postal envelopes 2 within the respective compartments 61a through 61f are completed.

By driving the respective reader antennas 62a through 62f in a sequential order corresponding to the respective compartments, the interrogator 64 can certainly read data in a short time from the RF tags 3 of multiplicity of the postal envelopes 2 contained in the article container 61. Data reading from more of the postal envelopes 2 can be achieved efficiently by a single operation of reading.

The reading apparatus can be constituted requiring a smaller installation area even if a plurality of reader antennas are used, because arrangement of the reader antennas can be made such that the respective sides of the reader antennas 62a, 62b, and 62c opposite to ones on which the feeder terminals are provided are placed close to or even in contact with the counterparts of the reader antennas 62d, 62e, and 62f. In addition, because each of the reader antennas 62a through 62f is a plane antenna, the thickness of the antenna can be reduced. Thus, the reading apparatus, as a whole, comprising the reader antennas 62a through 62f, the coaxial cables 63a through 63f, and the interrogator 64 can be constructed thin and compact.

Fourth comparative example

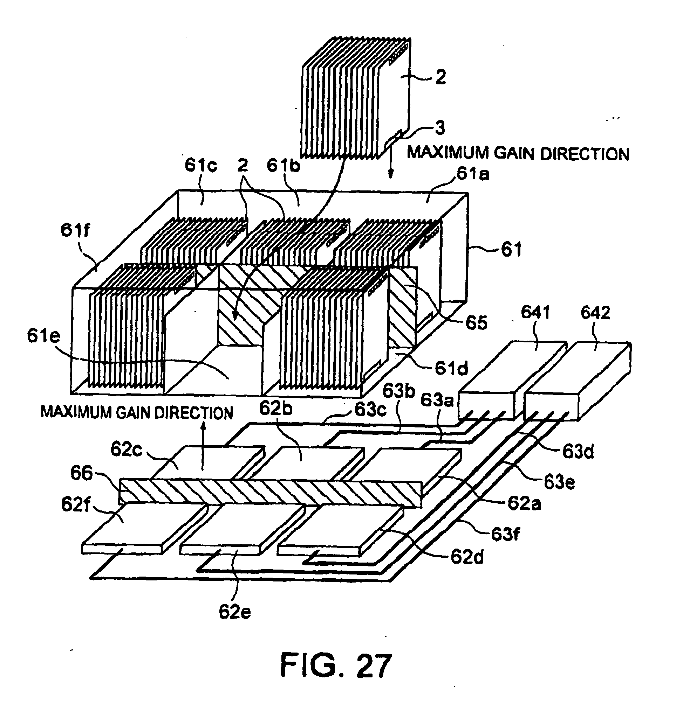

As seen in FIG. 27, a partition board partitioning the article container 61 is made of an electromagnetic shield plate 65. The electromagnetic shield plate 65 prevents radio interference between the RF tags 3 affixed to the postal envelopes 2 within compartments 61a, 61b, and 61c and those within the compartments 61d, 61e, and 61f. The electromagnetic shield plate 65 may be formed of an electromagnetic wave absorber, a metal, or constituted such that an electromagnetic wave absorber or metal foil is adhered to an insulative partition board.

An electromagnetic shield plate 66 formed of a metal or electromagnetic wave absorber is provided between a first antenna line comprising reader antennas 62a, 62b, and 62c and a second antenna line comprising reader antennas 62d, 62e, and 62f.

The reader antennas 62a, 62b, and 62c are connected to a first interrogator 641 via the coaxial cables 63a, 63b, and 63c, respectively; the reader antennas 62d, 62e, and 62f are connected to a second interrogator 642 via the coaxial cables 63d, 63e, and 63f, respectively. The structure, otherwise, is the same as that in the 6th embodiment.

Since radio interference between the first antenna line and the second antenna line can be alleviated, the two reader antenna lines can be arranged even closer to each other.

Since the apparatus is constituted such that the first antenna line is driven by the first interrogator 641 while the second antenna line is driven by the second interrogator 642, the reader antennas of the respective antenna lines can be operated concurrently.

In this case, the frequency channel to be used by the first interrogator 641 and the frequency channel to be used by the second interrogator 642 would preferably be differentiated. However, use of one frequency common to both interrogators 641 and 642 can also be possible because the electromagnetic shielding plate 66 prevents the radio interference therebetween. Although, if the reader antenna in the first antenna line and that in the second antenna line are operated concurrently, the reader antennas of the respective antenna lines are preferably positioned distant as in a relation between 62a and 62f, data can be read without any problems even if neighboring reader antennas, for example, 62a and 62d are operated concurrently because of the electromagnetic shielding plate 66 interposing the two antennas.

Since the electromagnetic shielding plate 65 is provided between the first antenna line and the second antenna line within the article container 61, radio interference between the RF tags of the two antenna lines can be alleviated. Because of alleviation of the radio interference between the two antenna lines, almost no data is accidentally read from the RF tags of the postal envelopes 2 contained in the compartments 61d, 61e, arid 61f when data is being read from the RF tags of the postal envelopes 2 contained in the compartments 61a, 61b, and 61c. The same can be said to the case when data reading takes place by the reader antennas 62d, 62e, and 62f from the RF tags of the postal envelopes 2 contained in the compartments 61d, 61e, and 61f.

Thus, even if the reader antennas 62a, 62b, and 62c of the first antenna line and the reader antennas 62d, 62e, and 62f of the second antenna line are operated concurrently, data reading from the RF tags of the postal envelopes 2 contained in the respective compartments can be certainly achieved. By operating the reader antennas of the two lines concurrently, efficiency of the data reading can be improved and a time for reading the RF tags 3 can be reduced.

Fifth comparative example

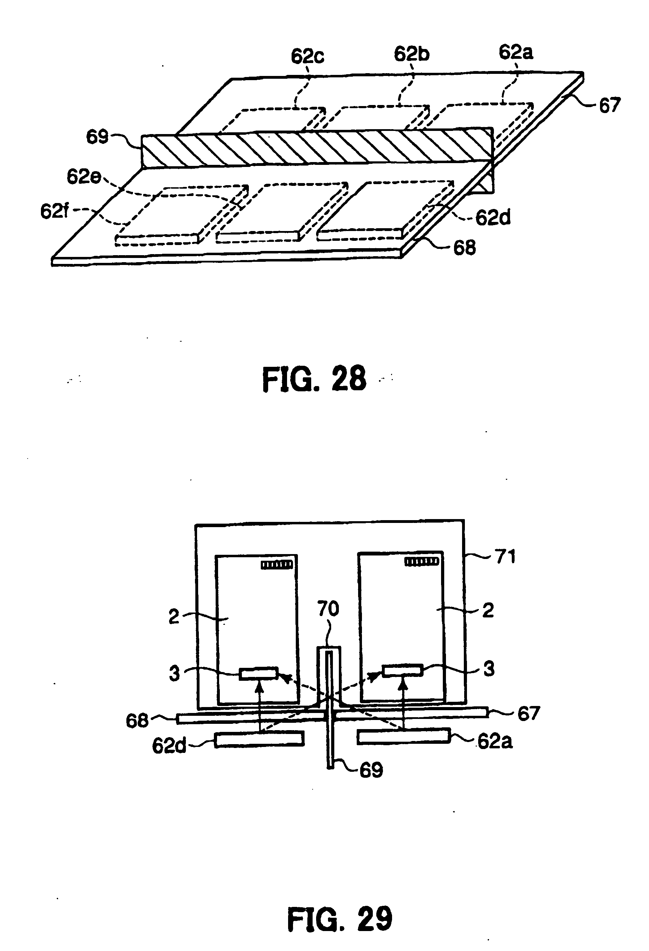

As shown in FIG. 28, the first antenna line and the second antenna line are provided under tables 67 and 68, respectively. To prevent radio interference, an electromagnetic shielding plate 69 is provided between the table 67 under which the first antenna line is provided and the table 68 under which the second antenna line is provided.

The apparatus is structured such that an article container 71 is placed on the tables 67 and 68. The article container 71 comprises six compartments in total, as in the case of the article container 71, of two antenna lines, each antenna line containing 3 compartments. In each of the compartments, a plurality of the postal envelopes 2 with the RF tags 3 affixed thereto are to be contained in a fashion that each of the envelopes stands with its lengthy side upward. As seen in FIG. 29, the article container 71 is provided with a partition wall in the bottom that partitions the two antenna lines. Within the partition wall, there is formed groove-like hollow section into which the electromagnetic shielding plate 69 is inserted from the bottom of the article container 71.

As also seen in FIG. 29, when the article container 71 is placed on the tables 67 and 68, portion of the electromagnetic shielding plate 69 higher than the tables 67 and 68 is inserted into the hollow section 70. Communication paths indicated by dashed arrow lines in FIG. 29 are blocked by the electromagnetic shielding plate 69, and thereby radio interference between the two antenna lines can be prevented. By preventing the radio interference, the first antenna line can certainly read data from the RF tags 3 of the postal envelopes 2 contained in the line corresponding to the first antenna line, but erroneous reading from the RF tags 3 of the postal envelopes 2 contained in the line corresponding to the second antenna line can be prevented.

According to this structure, since, when the article container 71 is placed on the tables 67 and 68, portion of the electromagnetic shielding plate 69 higher than the tables 67 and 68 is inserted into the hollow section 70, a need of installing a separate electromagnetic shield plate within the article container 71 can be eliminated, thus the structure of the article container 71 can be simplified

Sixth comparative example

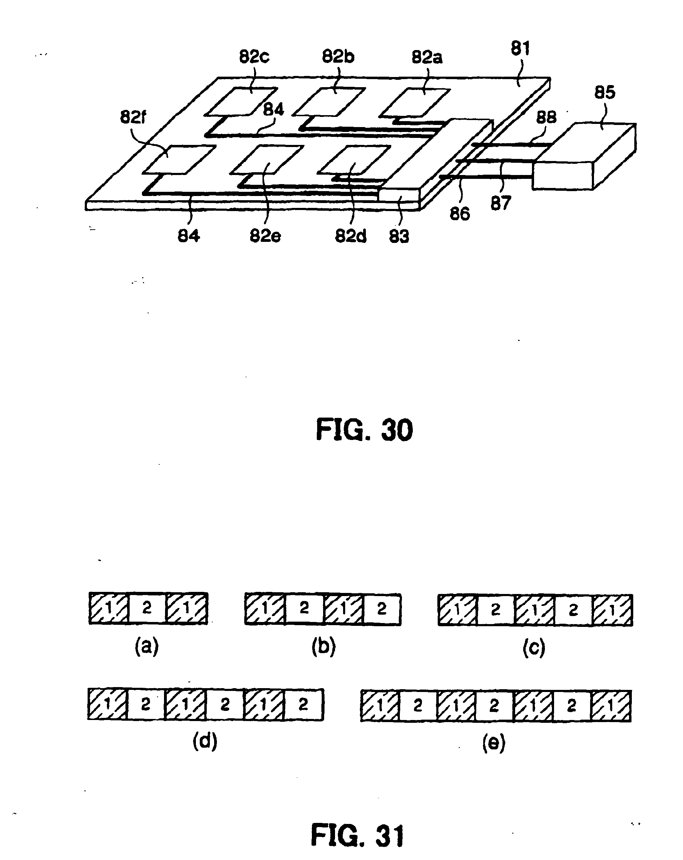

Herein is described a modified example of the reader antenna. As shown in FIG. 30, there are formed reader antennas 82a through 82f on a printed wiring board, which comprise a total of six plane patch antennas lined in two, each antenna line containing three antennas. There is mounted an antenna switching device 83 toward an edge line of the printed wiring board 81.

A reader antenna device is constituted such that the reader antennas 82a through 82f and the antenna switching device 83 on the printed wiring board 81 are integrated by connecting this antenna switching device 83 to the respective reader antennas 82a though 82f by a printed circuit 84.

The antenna switching device 83 is also connected to an interrogator 85 via a coaxial cable 86, power cable 87, and control signal cable 88. The power cable 87 and control signal cable 88 may be lapped on the coaxial cable 86.

Since use of the reader antenna device integrating several components on the printed wiring board facilitates connection between the reader antennas 82a though 82f and the interrogator 85, the whole apparatus can be easily fabricated. Also, because the reader antennas 82a though 82f can be formed on the printed wiring board 81, the heights of the reader antennas 82a though 82f can be uniformized. Thereby, distances between the respective reader antennas 82a though 82f and the RF tags of the respective postal envelopes 2 can be uniformized. Furthermore, by using the plane patch antennas, the whole apparatus can be formed even thinner.

Seventh comparative example

Now, description will be made for a reader antenna device driving a plurality of reader antennas arranged in line. When more than one reader antenna arranged close to each other are driven concurrently, the reader antenna device that uses an antenna switching device including means for driving reader antennas so as to reduce radio interference is useful.

FIG. 31 indicates some examples of arranging three to seven reader antennas. A number on those antennas indicates a group number of antennas that are to be concurrently operated and a sequence number of the operation.

For example, if three antennas are arranged, first, the antennas at both ends marked with hatched lines and numbered as "1" are to be concurrently operated, while the operation of antenna numbered as "2" is suspended, as shown in FIG. 31(a). Next, only antenna numbered as "2" is operated, while operations of those numbered as "1" at both ends are suspended.

In an arrangement of four antennas, as shown in FIG. 31 (b), first, two of every other antennas numbered as "1" are to be concurrently operated, while the remaining two antennas numbered as "2" are not operated. Next, two of every other antennas numbered as "2" are operated concurrently, while the two antennas numbered as "1" are not operated. In an arrangement of five antennas, as shown in FIG. 31 (c), first, three of every other antennas numbered as "1" are to be concurrently operated, while the remaining two antennas numbered as "2" are not operated. Next, two of every other antennas numbered as "2" are operated concurrently, while the three antennas numbered as "1" are not operated.

In an arrangement of six antennas, as shown In FIG. 31 (d), first, three of every other antennas numbered as "1" are to be concurrently operated, while the remaining three antennas numbered as "2" are not operated. Next, three of every other antennas numbered as "2" are operated concurrently, while the three antennas numbered as "1" are not operated. In an arrangement of seven antennas, as shown in FIG. 31 (e), first, four of every other antennas numbered as "1" are to be concurrently operated, while the remaining three antennas numbered as "2" are not operated. Next, three of every other antennas numbered as "2" are operated concurrently, while the four antennas numbered as "1" are not operated.

In the above method of driving those antennas, because one non-operating antenna always interposes the antennas that are concurrently operated, radio interference between antennas that are concurrently operated can be reduced as much as possible.

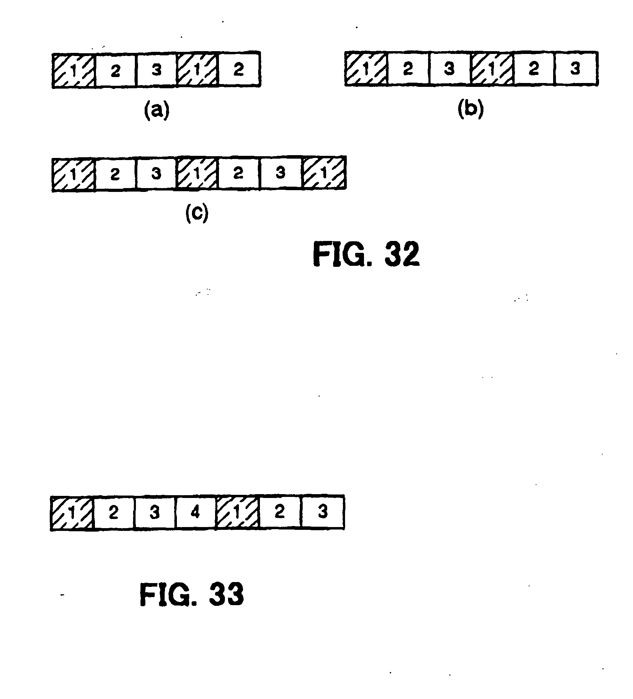

If the number of the reader antennas is five or more, more than one non-operative antenna may interpose the operative ones. For example, in the case of arranging five antennas, first, two antennas hatched and numbered as "1", as shown in FIG. 32 (a), are operated concurrently, while the remaining three antennas numbered as "2" and "3" are not to be operated. Next, the two antennas numbered as "2" are operated concurrently, while the three antennas numbered as "3" and "1" are not operated. At last, one antenna numbered as "3" is operated, while the four antennas numbered as "1" and "2" are not operated.

In the arrangement of six reader antennas, first, two antennas hatched and numbered as "1," as shown in FIG. 32 (b), are operated concurrently, while the remaining four antennas numbered as "2" and "3" are not to be operated. Next, the two antennas numbered as "2" are operated concurrently, while the four antennas numbered as "3" and "1" are not operated. At last, two antennas numbered as "3" are operated concurrently, while the four antennas numbered as "1" and "2" are not operated.

In the arrangement of seven reader antennas, first, three antennas hatched and numbered as "1", as shown in FIG. 32 (c), are operated concurrently, while the remaining four antennas numbered as "2" and "3" are not to be operated. Next, the two antennas numbered as "2" are operated concurrently, while the five antennas numbered as "3" and "1" are not operated. At last, two antennas numbered as "3" are operated concurrently, while the five antennas numbered as "1" and "2" are not operated.

If seven antennas are arranged, three non-operative antennas may interpose operative ones. That is, as shown in FIG. 33, two antennas hatched and numbered as "1" are operated concurrently, while the remaining five antennas numbered as "2," "3," and "4" are not to be operated. Next, the two antennas numbered as "2" are operated concurrently, while the five antennas numbered as "3," "4," and "1" are not operated. Next, the two antennas numbered as "3" are operated concurrently, while the five antennas numbered as "4," "1," and "2" are not operated. At last, one antenna numbered as "4" is operated, while the six antennas numbered as "1," "2," and "3" are not operated.

In the case that more than one antenna are concurrently operated, the radio interference between the concurrently operated antennas can be further alleviated by interposing the operative ones by more than one non operative antenna in this manner.

In this example, operations of plural reader antennas arranged in a single antenna line have been described. Even in an arrangement of plural antenna lines where each antenna line comprises plural reader antennas, the above-mentioned operational manners can be applied to each of the plural antenna lines, if an electromagnetic shielding material is provided between the two antenna lines so that radio interference between the antennas in two antenna lines can be reduced.

Eight comparative example

Now, an apparatus having a reader antenna device for driving a plurality of reader antennas arranged in two antenna lines will be described. In an arrangement of plural reader antennas that are disposed close to each other in two antenna lines, it is useful to employ a method of driving so as to alleviate radio interference.

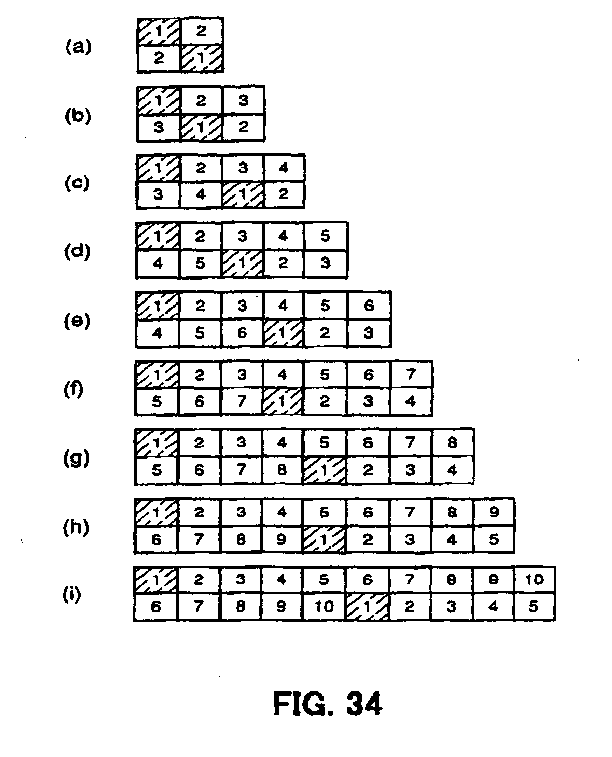

FIG. 34 shows arrangements of plural reader antennas and methods of concurrently operating those antennas. There are formed two antenna lines in each of which two to ten antennas are arranged. A number on the antennas indicates of each of operative groups, antennas within which are to be concurrently operated, and a sequence number of the operation.

In an arrangement of two antenna lines each line containing two reader antennas, as shown in FIG. 34 (a), first, two antennas of the upper left and lower right, each hatched and numbered as "1," are operated concurrently, while the remaining two antennas numbered as "2" are not to be operated. Next, the two antennas of the upper right and lower left, each numbered as "2" are operated concurrently, while the remaining two antennas numbered as "1" are not operated.

In an arrangement of two antenna lines each line containing three reader antennas, as shown in FIG. 34 (b), first, two antennas hatched and numbered as "1," are operated concurrently, while the remaining four antennas numbered as "2" and "3" are not to be operated. Next, the two antennas numbered as "2" are operated concurrently, while the remaining four antennas numbered as "3" and "1" are not operated. At last, two antennas numbered as "3" is operated concurrently, while the remaining four antennas numbered as "1" and "2" are not operated.

In an arrangement of two antenna lines each line containing four reader antennas, as shown in FIG. 34 (c), first, two antennas hatched and numbered as "1," are operated concurrently, while the remaining six antennas numbered as "2," "3," and "4" are not to be operated. Next, the two antennas numbered as "2" are operated concurrently, while the remaining six antennas numbered as "3," "4," and "1" are not operated. Next, the two antennas numbered as "3" are operated concurrently, while the remaining six antennas numbered as "4," "1," and "2" are not operated. At last, two antennas numbered as "4" are operated concurrently, while the remaining six antennas numbered as "1" and "2," and "3" are not operated.

Similarly, in an arrangement of two antenna lines each line containing five reader antennas, as shown in FIG. 34 (d), every two antennas with a same number are concurrently operated in a sequence from "1" to "5," as shown. In an arrangement of two antenna lines each line containing six reader antennas, as shown in FIG. 34 (e), every two antennas with a same number are concurrently operated in a sequence from "1" to "6," as shown. In an arrangement of two antenna lines each line containing seven reader antennas, as shown in FIG. 34 (f), every two antennas with a same number are concurrently operated in a sequence from "1" to "7," as shown. In an arrangement of two antenna lines each line containing eight reader antennas, as shown in FIG. 34 (g), every two antennas with a same number are concurrently operated in a sequence from "1" to "8," as shown. In an arrangement of two antenna lines each line containing nine reader antennas, as shown in FIG. 34 (h), every two antennas with a same number are concurrently operated in a sequence from "1" to "9," as shown. In an arrangement of two antenna lines each line containing ten reader antennas, as shown in FIG. 34 (i), every two antennas with a same number are concurrently operated in a sequence of from "1" to "10," as shown.

Alternatively expressed, let it be assumed that a total number of the reader antennas arranged in two antenna lines of the upper and lower, is n, there would be provided m non-operative antennas between operative ones in each of the upper and lower lines. This relation is expressed by a formula

$$m = n/4 \cdot 1,$$

where m and n are of an integer and a fraction of a value n/4 is rounded off.

If a total number of the reader antennas used, n, is 4 or 6, the value m becomes 0. That is, a non-operative reader antenna between two antennas that are concurrently operated does not exist. However, since the concurrently operated two antennas are disposed diagonally relative to each other, radio interference can be alleviated.

If a total number of the reader antennas used, n, is 8 or 10, the value m becomes 1. That is, there would exist one non-operative reader antenna between concurrently operated two antennas. For example, if n = 8, when two reader antennas bearing a numeral "1" are to be concurrently operated, two non-operative antennas bearing numbers "2" and "4" would interpose the two. The reader antenna bearing number "2" lies in the upper line, and one bearing a number "4" lies in the lower. Accordingly, in view of one line, the number of non-operative antennas interposing the two reader antennas bearing number "1" would be one.

Since in the case a total number of the reader antennas used, n, is 12 or 14, m becomes "2"; there would exist two of the non-operative reader antennas between two concurrently operated antennas in an antenna line. If a total number of the reader antennas is 16 or 18, then m = 3; that is, there would exist three of the non-operative antennas between two concurrently operated antennas in an antenna line. Furthermore, if a total number of the antennas is 20, then m = 4; that is, there would be four of the non-operative antennas between two concurrently operated antennas in an antenna line. If two antennas, one in each line, are concurrently operated, radio interference can be further suppressed by providing one or more non-operative antennas between the two operative antennas in the lines.

By carrying methods as described above, even if an electromagnetic shielding material is not provided between two antenna lines, in each of which plural reader antennas are arranged close to each other, two reader antennas can be concurrently operated under a circumstance of suppressed radio interference.

Descriptions have been made in use of a postal envelope as a planar article with an RF tag affixed thereto. However, the invention, of course, is not restricted to such a form of the article.

Numerous modifications and variations of the present invention are possible in light of the above teachings. It is therefore to be understood that, within the scope of the appended claims, the present invention can be practiced in a manner other than as specifically described therein.

**Claims**

1. An RF tag module (12) having an RF tag (3) which includes an IC chip (4) and an antenna (5) connected to the IC chip (4), said IC chip and said antenna being integrally molded with a covering material (6), **characterized in that** the RF tag module further comprises a reflector (17) made of an electrically conductive material and a holding member (18) for holding said RF tag (3) and said reflector (17), and the antenna (5) of the RF tag (3) and said reflector (17) are arranged in parallel with each other with a predetermined distance (D1) between them thereby providing a maximum gain direction of the RF tag (3) antenna (5) in direction from the reflector (17) towards the RF tag (3).

2. An RF tag module according to claim 1, wherein a distance between the antenna (5) of said RF tag (3) and said reflector (17) is set to a value of not more than 1/8 of a wave length of a carrier used in transmission and reception from/to said RF tag (3), and a length (21) of said reflector (17) is set to a nearly half of a wave length of the carrier.

3. An RF tag module according to claim 1 or 2, wherein the holding member (18) includes a spacer (19) configured to create a space between RF tags (3) when a plurality of RF tag modules (12) each having an RF tag (3) are contained in a container (11).

4. A planar article (105) with data which is read by an RF tag reading apparatus, wherein the article is provided with an RF tag module (12) set forth in one of claims 1 to 3.

5. A planar article according to claim 4, wherein said RF tag (3) is disposed in the center of the article.

6. A planar article according to claim 4 or 5, wherein the planar article includes a spacer (19) configured to create a space between RF tags (3) when a plurality of planar articles each having an RF tag (3) are contained in a container (11).

**Patentansprüche**

1. RF-Tag-Modul (12) mit einem RF-Tag (3), das einen IC-Chip (4) und eine Antenne (5), die mit dem IC-Chip (4) verbunden ist, aufweist, wobei der IC-Chip und die Antenne einstückig mit einem Abdeckungsmaterial (6) ausgebildet sind, **dadurch gekennzeichnet, dass** das RF-Tag-Modul weiter einen Reflektor (17), der aus einem elektrisch leitenden Material gemacht ist, und ein Halteteil (18) zum Halten des RF-Tags (3) und des Reflektors (17) aufweist, und dass die Antenne (5) des RF-Tags (3) und der Reflektor (17) parallel zu einander und mit einem vorbestimmten Abstand (D1) zwischen sich angeordnet sind, wodurch eine Richtung der Maximalverstärkung der Antenne (5) des RF-Tags (3) in Richtung von dem Reflektor (17) zu dem RF-Tag (3) vorgesehen wird.

2. RF-Tag-Modul gemäß Anspruch 1, bei dem ein Abstand zwischen der Antenne (5) des RF-Tags (3) und dem Reflektor (17) auf einem Wert, der nicht größer als 1/8 der Wellenlänge einer Trägerwelle, die beim Senden und Empfangen zu/von dem RF-Tag (3) verwendet wird, eingestellt ist, und eine Länge (L1) des Reflektors (17) auf nahezu die Hälfte einer Wellenlänge des Trägers eingestellt ist.

3. RF-Tag-Modul gemäß Anspruch 1 oder 2, bei dem das Halteteil (18) einen Abstandshalter (19), der gestaltet ist zum Erzeugen eines Abstands zwischen RF-Tags (3), wenn eine Mehrzahl von RF-Tag-Modulen (12), von denen jedes ein RF-Tag (3) aufweist, in einem Container (11) enthalten sind, aufweist.

4. Planer Gegenstand (105) mit Daten, die durch ein RF-Tag-Lesegerät gelesen werden, wobei der Gegenstand mit einem RF-Tag-Modul (12) nach einem der Ansprüche 1 bis 3 vorgesehen ist.

5. Planer Gegenstand gemäß Anspruch 4, wobei das RF-Tag (3) in der Mitte des Gegenstands angeordnet ist.

6. Planer Gegenstand gemäß Anspruch 4 oder 5, wobei der plane Gegenstand einen Abstandshalter (19), der zum Erzeugen eines Abstands zwischen RF-Tags (3), wenn eine Mehrzahl von RF-Tag-Modulen (12), von denen jedes ein RF-Tag (3) aufweist, in einem Container (11) enthalten sind, aufweist.

**Revendications**

1. Module d'étiquette à radiofréquence (12) possédant une étiquette à radiofréquence (3) qui comprend une puce à circuit intégré (4) et une antenne (5) connectée à la puce à circuit intégré (4), ladite puce à circuit intégré et ladite antenne étant moulées d'un seul tenant avec un matériau de couverture (6), **caractérisé en ce que** le module d'étiquette à radiofréquence comprend en outre un réflecteur (17) constitué d'un matériau conducteur d'électricité et un élément de support (18) destiné à supporter ladite étiquette à radiofréquence (3) et ledit réflecteur (17), et l'antenne (5) de l'étiquette à radiofréquence (3) et ledit réflecteur (17) sont agencés parallèlement l'un à l'autre avec une distance prédéterminée (01) entre eux, fournissant de ce fait une direction de gain maximale de l'antenne (5) de l'étiquette à radiofréquence (3) dans la direction allant du réflecteur (17) vers l'étiquette à radiofréquence (3).

2. Module d'étiquette à radiofréquence selon la revendication 1, dans lequel une distance entre l'antenne (5) de l'étiquette à radiofréquence (3) et ledit réflecteur (17) est définie à une valeur de pas plus de 1/8 d'une longueur d'onde d'une porteuse utilisée dans la transmission et la réception depuis/vers ladite étiquette à radiofréquence (3), et une longueur (21) dudit réflecteur (17) est définie à presque la moitié d'une longueur d'onde de la porteuse.

3. Module d'étiquette à radiofréquence selon la revendication 1 ou 2, dans laquelle l'élément de support (18) comprend une entretoise (19) configurée pour créer un espace entre les étiquettes à radiofréquence (3) lorsqu'une pluralité de modules d'étiquettes à radiofréquence (12) ayant chacun une étiquette à radiofréquence (3) est contenue dans un conteneur (11).

4. Article planaire (105) avec des données qui sont lues par un appareil de lecture d'étiquette à radiofréquence, dans lequel l'article est doté d'un module d'étiquette à radiofréquence (12) présenté dans l'une des revendications 1 à 3.

5. Article planaire (105) selon la revendication 4, dans lequel ladite étiquette à radiofréquence (3) est située au centre de l'article.

**6.** Article planaire selon la revendication 4 ou 5, dans lequel l'article planaire comprend une entretoise (19) configurée pour créer un espace entre les étiquettes à radiofréquence (3) lorsqu'une pluralité d'articles planaires ayant chacun une étiquette à radiofréquence (3) est contenue dans un conteneur (11).

MAXIMUM GAIN DIRECTION

MAXIMUM GAIN DIRECTION

FIG. 1

**FIG. 2**

FIG. 3

**FIG. 4**

~100

101

d

## FIG. 5

FIG. 6

**FIG. 7**

FIG. 8

FIG. 9

**FIG. 10**

**FIG. 11**

**FIG. 12**

**FIG. 13**

**FIG. 14**

(a)

(b)

# FIG. 15

**FIG. 16**

Readable range — A

16a, 16b

FIG. 17

FIG. 18

FIG. 19

**FIG. 20**

**FIG. 21**

EP 1 522 950 B1

FIG. 22

34

**FIG. 23**

**FIG. 24**

FIG. 25

**FIG. 26**

**FIG. 27**

FIG. 28

FIG. 29

**FIG. 30**

**FIG. 31**

(a)

(b)

(c)

# FIG. 32

# FIG. 33

**FIG. 34**